# EUROPÄISCHE PATENTSCHRIFT

(11) **EP 0 531 706 B1**
(45) Veröffentlichungstag und Bekanntmachung des Hinweises auf die Patenterteilung: **05.07.1995**
(21) Anmeldenummer: 92113249.4
(22) Anmeldetag: 04.08.1992
(51) Int. Cl.: F28D 11/02, F28F 5/02

(54) **Trommel, insbesondere Kühl- oder Heiztrommel**
Drum, more particularly cooling or heating drum
Tambour, en particulier tambour de refroidissement ou de chauffage

(30) Priorität: 07.09.1991 DE 4129815
(43) Veröffentlichungstag der Anmeldung: 17.03.1993
(73) Patentinhaber: Santrade Limited, CH-6002 Lucerne (CH)
(72) Erfinder: Stunzer, Norbert, A-2100 Leobendorf (AT); Fritsch, Alfred, A-2191 Schrick (AT)
(74) Vertreter: Wilhelm & Dauster Patentanwälte European Patent Attorneys

(56) Entgegenhaltungen:
- WO-A-84/02573
- DE-C- 842 650
- DE-C- 3 213 512
- FR-A- 1 534 680
- GB-A- 2 056 049
- US-A- 4 394 021
- US-A- 4 821 536

## Beschreibung

Die Erfindung bezieht sich auf eine Trommel nach dem Oberbegriff des Patentanspruchs 1.

Eine solche Trommel dient dazu, ein Rohprodukt in einem kontinuierlichen Verfahren einer Temperaturbeeinflussung auszusetzen. Hierzu wird das Rohprodukt entweder auf die Außen- oder auf die Innenseite des Trommelmantels aufgebracht, während auf der jeweils anderen Seite des Trommelmantels ein gegenüber dem Rohprodukt kühleres oder wärmeres Arbeitsfluid aufgebracht wird. Während durch Rotation des Trommelmantels das Rohprodukt von einer Aufgabe- zu einer Abgabestation gelangt, wird es mittels Wärmeleitung durch den Trommelmantelquerschnitt hindurch von der Temperatur des Arbeitsfluids beeinflußt, ohne mit letzterem in direkten Kontakt zu gelangen. Auf diese Art wird beispielsweise ein Rohprodukt durch Aufbringen eines wärmeren Arbeitsfluids getrocknet oder durch Aufbringen eines kühleren Arbeitsfluids gekühlt, kristallisiert oder gefroren.

Es ist bekannt, zu diesem Zweck Trommeln mit massiv geschweißtem oder gegossenem Trommelmantel zu verwenden, dessen Wandstärke den Festigkeitsanforderungen entsprechend groß gewählt ist. Eine solche Kühltrommel zur Herstellung von Speiseeis ist in der DE-PS 940 227 offenbart. Dort ist innerhalb eines starren Trommelmantels eine Verdampfer/Kondensator-Einheit angeordnet. An diese ist eine Kühlschlangenleitung angeschlossen, die sich entlang der Innenseite des Trommelmantels erstreckt und in der das Arbeitsfluid, in diesem Fall ein Kältemittel, zirkuliert. Auf die Außenseite des Trommelmantels wird Gefrierwasser aufgebracht und gefriert dort, bis es durch die Rotation der Trommel zu einer Abgabeestation gelangt, in der das gebildete Eis von der Trommelmantelaußenseite abgenommen und in Stücke gebrochen wird.

Die starre Ausführung des Trommelmantels erfordert für die bekannten Trommeln eine der erforderlichen Festigkeit entsprechende hohe Wandstärke, die den Wärmeübergang beeinträchtigt. Zudem besitzen solche Trommeln ein verhältnismäßig hohes Eigengewicht und können bei einer auf ein bestimmtes Rohprodukt zugeschnittenen Strukturierung des Trommelmantels nicht auf einfache Weise für andere Rohprodukte umgerüstet werden.

Eine Trommel der eingangs genannten Art ist aus der WO 84/02573 bekannt. Dort ist ein doppelwandiger Wärmetauscher gezeigt, bei dem eine innere feststehende Trommel von einem äußeren Trommelmantel umgeben ist, so daß in den Zwischenraum zwischen innerer Trommel und äußerem Trommelmantel das Wärmetauschmedium eingegeben werden kann. Dies geschieht durch eine feststehende koaxial zur inneren Trommel angeordneten Achse, auf der drehbar stirnseitige Scheiben gelagert sind, von denen der äußere Trommelmantel gehalten wird. Dies geschieht dabei über axial zusammenziehbare, an den Stirnscheiben gelagert konische Ringe, von denen ein äußerer Ring beim Anziehen von Schrauben radial nach außen und gegen den Innendurchmesser des äußeren Trommelmantels zum Zweck der Befestigung gedrückt wird. Zur Abdichtung sind Dichtungsringe vorgesehen, die beim Anziehen der Schrauben der konischen Ringe verquetscht und ebenfalls gegen den äußeren Trommelmantel gedrückt werden.

Auch bei dieser Bauart ist der äußere Trommelmantel starr ausgeführt und bedarf daher, auch wenn er mit dort vorgesehenen Verstärkungsringen versehen und von einem Überdruck zwischen innerer Trommel und äußerem Trommelmantel getragen wird, einer entsprechenden Wandstärke, die den Wärmeübergang beeinträchtigen kann. Neben dem durch den stabilen Trommelmantel erhöhten Eigengewicht ist die Bauart des dort vorgesehenen Trommelmantels, insbesondere wenn er mit Verstärkungsringen versehen sein soll, verhältnismäßig aufwendig. Auch der Montagevorgang an den stirnseitigen Scheiben ist aufwendig.

Aus der DE-PS 611 867 ist es zwar bekannt, eine Trommel vorzusehen, die mit einem auswechselbaren Bezug aus einem geeigneten Baustoff, z.B. aus Gummi, Gummipositionsfilz o.dgl. besteht. Dieser, als nahtloser Hohlzylinder ausgebildete Bezug, wird über an den Stirnseiten der Trommel angeordnete Spannteile mit Segmenten zum lösbaren und aufgespannten Halten befestigt. Dieser Bezug muß aber auf der Innenseite durch entsprechende segmentförmige Mantelabschnitte unterstützt werden, so daß eine zur Wärmeübertragung zwischen Innen- und Außenseite geeignete Trommel, deren Innenraum auch abgedichtet sein muß, auf diese Weise nicht geschaffen werden kann.

Aufgabe der Erfindung ist die Schaffung einer Trommel der eingangs genannten Art, die einen guten Wärmeübergang sowie ein geringes Eigengewicht aufweist und außerdem auf einfache Weise zur Verwendung für unterschiedliche Rohprodukte umrüstbar ist.

Diese Aufgabe wird durch eine Trommel mit den Merkmalen des Patentanspruchs 1 gelöst. Das als Trommelmantel dienende Endlosband besitzt im Vergleich zu einem starren Trommelmantel eine kleinere Wandstärke und ein geringeres Gewicht. An den trommelstirnseitig angeordneten Spannscheiben ist das Endlosband beidseitig aufgespannt abgedichtet gehalten. Es läßt sich dort problemlos lösen, wonach es leicht abgezogen werden kann, da es gegenüber den Spannscheiben eine etwas größere Umfangslänge besitzt. Auf diese Weise kann bei Bedarf das aufgespannte Endlosband leicht durch ein anderes Endlosband zur Bearbeitung eines weiteres Rohprodukts ausgetauscht werden, ohne daß hierzu eine völlig neue Trommelanordnung erforderlich ist. Als Bandmaterialien sind die verschiedensten Werkstoffe möglich, z.B Edelstahl, Kohlenstoffstahl, Kupfer, Nickel, Titan oder Kunststoff.

Dabei sind als Mittel zum Aufspannen des Endlosbandes pneumatisch aufblasbare, endlose Hohlprofildichtungen vorgesehen, die am Außenumfang der Spannscheiben umlaufen. Mit einer solchen Hohlprofildichtung wird eine über den Umfang gleichmäßig verteilte, radial nach außen wirkende Spannkraft auf das Endlosband ausgeübt, sobald die Hohlprofildichtungen aufgeblasen sind. Durch Belüften der Dichtungen wird die dichte Verbindung zwischen Spannrädern und Endlosband wieder gelockert und das Endlosband kann von den Spannrädern abgezogen und durch ein anderes ausgetauscht werden. Zur gleichmäßigen, elastischen Anlage der Hohlprofildichtungen am Endlosband sind bevorzugt solche aus elastischem,endlos vulkanisiertem Material vorgesehen.

Eine Weiterbildung der Erfindung nach Anspruch 3 hat den Vorteil, daß die Hohlprofildichtungen nach dem Aufblasen mit der in etwa planen, profilierten, radialen Außenfläche gegen das Endlosband breitflächig zur Anlage kommen. Dies ergibt einen hohen Haftreibungskoeffizient zwischen Endlosband und den Hohlprofildichtungen und resultiert in einer sowohl in der Axialwie auch in der Umfangsrichtung zuverlässig rutschfreien und abdichtenden Befestigung des Endlosbandes an den Spannscheiben.

Weiterhin ist es günstig, am Außenumfang der Spannscheiben eine radiale Nut zur Aufnahme der Hohlprofildichtungen vorzusehen. Die Hohlprofildichtungen sind dadurch insbesondere auch zu den Seiten hin gesichert auf den Spannscheiben fixiert.

In weiterer Ausgestaltung der Erfindung sind die Spannscheiben drehbar auf einer feststehenden Trommelachse gelagert, so daß die Trommelachse selbst von der Rotationsbewegung befreit bleibt. Es ist dann bevorzugt auf einfache Weise möglich, die Trommelachse mit Hohlkanälen zu versehen und das Arbeitsfluid durch diese hindurch in das Trommelinnere einzuführen und von dort wieder nach außen abzuführen. Mittels einer ortsfest angeordneten Sprühanlage nach Anspruch 7 läßt sich das Arbeitsfluid auf die Mantelinnenseite aufbringen. Besonders günstig zum Abführen des Arbeitsfluids wirkt sich das Anlegen eines Überdrucks im Trommelinneren und die Anordnung von Siphonrohren nach Anspruch 8 aus, wodurch das Arbeitsfluid durch Saugwirkung aus dem Trommelinneren abgezogen wird.

In einer weiteren Ausgestaltung der Erfindung nach Anspruch 9 sind eine oder mehrere Stützrollen vorgesehen, die jeweils einer auf der einen Trommelmantelseite angeordneten Aufgabe- und/oder Abgabestation gegenüberliegend gegen die andere Trommelmantelseite anliegen. Die Stützrollen kompensieren die gegebenenfalls an der Aufgabe- oder Abgabestation auftretenden Druckkräfte auf das vergleichsweise dünne Endlosband.

Eine bevorzugte Ausführungsform der Erfindung ist in den Zeichnungen dargestellt und wird nachfolgend beschrieben. Es zeigen:
- Fig. 1: einen Längsschnitt durch eine Trommelanordnung,
- Fig. 2: einen Querschnitt durch die Trommel der Fig. 1 und
- Fig. 3: den Detailbereich III der Fig. 1 in einer Ausschnittvergrößerung.

Die in den Figuren dargestellte Trommel (1) ist mit ihrer horizontalen Achse (6) auf einem Sockel (12) befestigt. Die Trommelachse (6) selbst verbleibt ortsfest am Sockel (12) und enthält Hohlkanäle (6a, 6b), die zur Zu- und Abführung des Arbeitsfluids dienen. Hierbei wird das Arbeitsfluid durch einen seitlichen Einlaß (15) in Pfeilrichtung zugeführt und auf der gegenüberliegenden Stirnseite durch ein Abflußrohr (11) wieder abgeführt. Als Arbeitsmedium dient je nach Verwendungszweck ein Kühl- oder ein Heizmedium, wie z.B. Dampf- oder Thermoöl als Heizmedium und flüssiger Stickstoff oder Ammoniak als Kühlmedium. Im Trommelinneren sind etwa mittig zwischen Trommelachse (6) und Trommelmantel (2) acht mit Sprühdüsen versehene Sprührohre (7a) in Umfangsrichtung etwa äquidistant verteilt angeordnet. Jeweils zwei Sprührohre (7a) sind an eine gemeinsame, T-förmige Zuleitung (7) angeschlossen, die an die Trommelachse (6) angeflanscht ist und mit dem entsprechenden Hohlkanal (6a) zur Zuführung des Arbeitsfluids in Verbindung steht. Von den Sprühdüsen gelangt das Arbeitsfluid in sich gegenseitig überlappenden Sprühkegeln (8) auf die Innenseite (2a) eines als Trommelmantel dienenden Endlosbandes (2). Das aufgesprühte Arbeitsfluid läuft an der Mantelinnenseite (2a) entlang nach unten und kühlt oder heizt dabei von innen den Trommelmantel (2). An der Trommelachse (6) sind weiterhin zwei Siphonrohre (17) angeflanscht, die sich von der Trommelachse (6) nach unten bis in die Nähe der Mantelinnenseite (2a) erstrecken. Die Siphonrohre (17) stehen mit dem Auslaßrohr (11) über einen entsprechenden Hohlkanal (6b) in der Trommelachse (6) in Verbindung. Durch Anlegen eines Überdrucks im Trommelinneren, wozu durch eine Einlaßleitung (14) Druckluft eingeblasen wird, wird das sich im unteren Bereich sammelnde Arbeitsfluid durch die Siphonrohre (17) hochgedrückt und gelangt über den Hohlkanal (6b) in der Trommelachse (6) zum Abflußrohr (11), wodurch das verbrauchte Arbeitsfluid aus dem Trommelinneren wieder entfernt wird.

Wie bereits oben gesagt, dient als Trommelmantel ein Endlosband (2), das eine vergleichsweise dünne Wandstärke, typischerweise 1,2mm bis 1,4mm, besitzt und aus einem endlos geschweißten Band aus Stahl besteht. Natürlich wäre es auch möglich, das Endlosband aus einem anderen Metall oder aus Kunststoff herzustellen. Das Endlosband (2) ist auf zwei trommelstirnseitig angeordnete Spannscheiben (3, 4) aufgezogen. Die Spannscheiben (3,4) sitzen über Lager (16) verdrehbar auf der ortsfesten Trommelachse (6). Durch einen Antrieb (13) werden die Spannscheiben (3, 4) in Rotation versetzt und nehmen hierbei das aufgespannte Endlosband (2) mit,während die Trommelachse (6) selbst nicht rotiert.

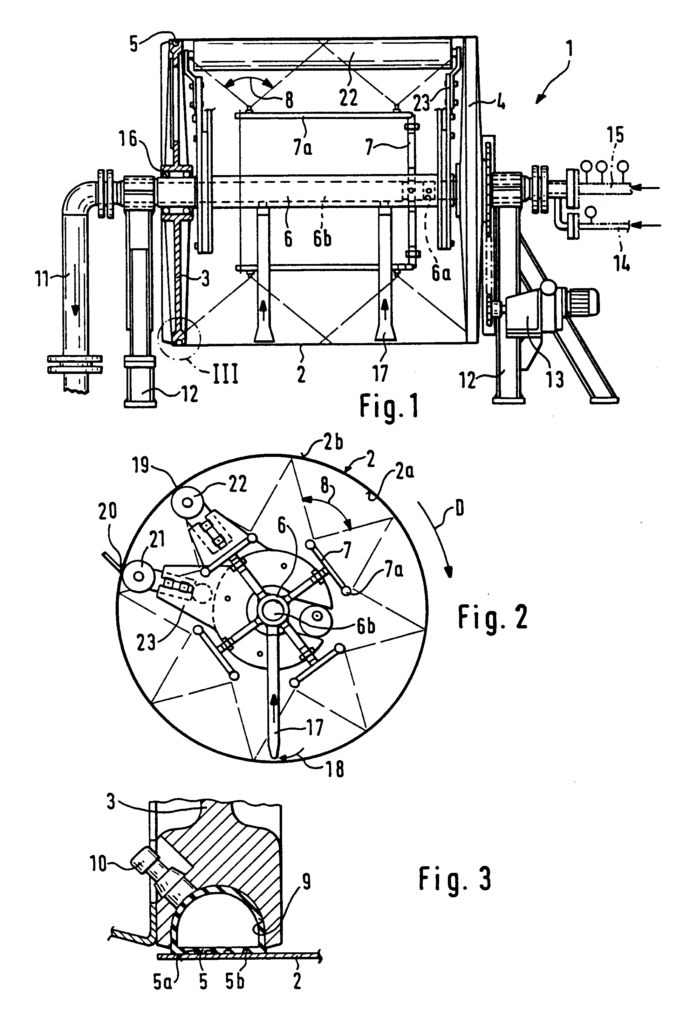

Die Halterung des aufgespannten Endlosbandes (2) an den Spannscheiben (3, 4) ist insbesondere aus der Detailzeichnung in Fig. 3 ersichtlich. Die Spannscheiben (3, 4) weisen entlang ihres Außenumfangs eine radiale Nut (9) halbkreisförmigen Querschnitts auf. In diese Nut (9) ist jeweils eine Hohlprofildichtung (5) eingefügt, deren radial nach innen weisender Rand der Gestaltung der Nut (9) angepaßt ist. Die Hohlprofildichtungen (5) bestehen aus elastischem, endlos vulkanisiertem Material und sind nach Art eines Fahrradschlauchs in die Radialnuten (9) der Spannscheiben (3, 4) eingesetzt. Über ein Ventil (10) ist die Hohlprofildichtung (5) aufblasbar und auch wieder zu entlüften.

Zur Montage des Endlosbandes (2) wird dieses zunächst über die Spannscheiben (3, 4) in die gewünschte Position gezogen. Dies ist problemlos möglich, weil die Umfangslänge des Außenumfangs der Spannscheiben (3, 4) geringfügig kleiner gewählt ist als die Umfangslänge der Innenseite (2a) des Endlosbandes (2). Daraufhin werden die Hohlprofildichtungen (5) der beiden Spannscheiben (3, 4) über das Ventil (10) mit Überdruck beaufschlagt und damit aufgeblasen. Dies geschieht mittels Druckluft, typischerweise mit bis zu 10 bar Überdruck. Dadurch erstreckt sich die Hohlraumdichtung (5) mit ihrer radial äußeren Fläche (5a) jeweils über den Außenradius der kreisrunden Spannscheibe (3, 4) hinaus, kommt mit dieser Fläche (5a) gegen das Endlosband (2) zur Anlage und drückt dieses über den Umfang gleichmäßig verteilt radial nach außen. Der gleichmäßige Druck entlang des Umfangs garantiert ein kreisrundes Spannen des Endlosbandes (2) und gleicht auch dessen Längendehnung aus. Zur Gewährleistung einer sicheren Abdichtung zwischen Trommelinnerem und der Außenseite sowie einer guten Haftung des Endlosbandes (2) mit den Hohlprofildichtungen (5) verläuft die radiale Außenfläche (5a) der Hohlprofildichtungen (5) in Axialrichtung der Trommel in etwa plan und somit parallel zur zugehörigen Kontaktfläche des Endlosbandes (2). Zusätzlich zu dem sich hieraus ergebenden, breitflächigen Kontakt zwischen Hohlprofildichtung (5) und Endlosband (2) weist die radiale Außenseite (5a) der Hohlprofildichtung (5) zur Unterstützung der Abdichtungs- und Halterungsfunktion eine zweckentsprechende Profilierung (5b) auf. Bei aufgeblasenen Hohlprofildichtungen (5) ist das Endlosband (2) in Axial- und in Drehrichtung rutschfest und das Trommelinnere zuverlässig abdichtend an den Spannscheiben (3, 4) gehalten.

Die aufgeblasenen Hohlprofildichtungen (5) übernehmen daher gleichzeitig die Abdichtung zwischen Trommelinnen- und Trommelaußenseite, die Drehmomentübertragung von den Spannscheiben (3, 4) auf das Endlosband (2) sowie die Seitenführung des Endlosbandes (2) und sorgen zudem für einen Ausgleich der Wärmedehnung des Endlosbandes (2).

Der Außenseite (2b) des Trommelmantels (2) sind im Abstand voneinander eine Aufgabestation (19) und eine Abgabestation (20) zugeordnet. An der Aufgabestation (19) wird das Rohprodukt auf die Trommelaußenseite (2b) aufgebracht. Während der Rotation der Spannscheiben (3, 4) und des damit verbundenen Endlosbandes (2) in Drehrichtung (D) erfolgt der Wärmeübergang zwischen dem außenseitig aufgebrachten Rohprodukt und dem innenseitig aufgesprühten Arbeitsfluid. Bei Erreichen der Abgabestation (20) , die im gezeigten Beispiel einen Drehwinkelabstand von ca. 320° von der Aufgabestation (19) hat, wird das fertige wärme- oder kältebehandelte Rohprodukt von der Trommelmantelaußenfläche (2b) abgenommen. Je nach Anwendungsfall st an der Aufgabe- und/oder an der Abgabestation eine Rakel und an der Abgabestation gegebenenfalls eine Quetschwalze angeordnet.

Wie insbesondere aus Fig. 2 ersichtlich, sind im Inneren der Trommel (1) zwei Stützrollen (21, 22) über eine Halterung (23) mit ihren Achsen ortsfest und parallel zur Trommelachse (6) an letzterer fixiert. Die beiden Stützrollen (21, 22) liegen jeweils gegen die Innenseite (2a) des Endlosbandes (2) an. Die eine Stützrolle (21) liegt der Abgabestation (20), die andere (22) der Aufgabestation (19) gegenüber. Sie kompensieren daher Druckkräfte, die eventuell durch das Aufgeben bzw. Abnehmen des Rohprodukts auf das vergleichsweise dünne Endlosband (2) einwirken können. Diese Maßnahme verhindert zuverlässig Verformungen des Endlosbandes (2) in den besonders empfindlichen Bereichen der Aufgabestation (19) und der Abgabestation (20) und beugt insbesondere mittigen Einbuchtungen des Endlosbandes (2) vor. Damit wird auch verhindert, daß sich die Halterung des Endlosbandes (2) an den Spannscheiben (3, 4) wegen Verformungen des Endlosbandes (2) verschlechtert. Da auf den übrigen Umfangsbereichen keine mechanische Einwirkung auf das Endlosband (2) stattfindet, sind weitere Stützrollen dort nicht zwingend erforderlich.

Es sei nochmals hervorgehoben, daß bei der erfindungsgemäßen Trommel (1) lediglich die Spannscheiben (3, 4) und das Endlosband (2) um die Trommelachse (6) rotieren, während die Trommelachse (6) selbst, die Zu- und Abführungen (15, 11) für das Arbeitsfluid und die Sprühanlage (7, 7a) zum Aufsprühen des Arbeitsfluids ortsfest verbleiben.

Es versteht sich, daß es gegebenenfalls auch möglich ist, das Arbeitsfluid auf die Trommelaußenseite und das Rohprodukt auf die Trommelinnenseite aufzubringen. Außerdem ist es selbstverständlich möglich, statt der im Ausführungsbeispiel gezeigten Hohlprofildichtung (5) andere, ähnlich wirkende Mittel zum Aufspannen des Endlosbandes (2) vorzusehen, beispielsweise eine Vielzahl am Umfang der Spannscheiben äquidistant angeordneter, radial nach außen drückender Federelemente oder fächerförmige Spannscheiben, deren Außenradius durch ein von einem Antrieb getriebenes Auffächern veränderbar ist.

Hervorzuheben ist die einfache Anpassung der neuen Trommel an unterschiedliche Rohprodukte. Das aufgezogene Endlosband wird hierfür nach Entlüften der Hohlprofildichtungen über eine der Spannscheiben abgezogen und gegen ein anderes Endlosband ausgetauscht, das hinsichtlich Material und Strukturierung für ein anderes Rohprodukt geeignet ist.

## Patentansprüche

1. Trommel, insbesondere Kühl- oder Heiztrommel, deren Trommelmantel der Wärmeübertragung zwischen einem auf die Mantelinnenseite (2a) oder auf die Mantelaußenseite (2b) aufbringbaren Arbeitsfluid und einem auf die jeweils andere Mantelseite gegenüberliegend aufbringbaren Rohprodukt dient und bei der an den Trommelstirnseiten Spannscheiben (3, 4) angeordnet sind, welche an ihrem Außenumfang radial aufweitbare Mittel (5) zum lösbaren und abgedichtet aufgespannten Halten des Trommelmantels aufweisen, dadurch gekennnzeichnet daß der Trommelmantel aus einem Endlosband (2) besteht, daß die Spannscheiben (3,4) eine gegenüber dem Endlosband geringere Umfangslänge aufweisen und daß als Mittel zum Halten des Endlosbandes (2) auf den Spannscheiben (3, 4) entlang des Außenumfangs der Spannscheiben umlaufende, endlose, pneumatisch aufblasbare Hohlprofildichtungen (5) vorgesehen sind.

2. Trommel nach Anspruch 1, dadurch gekennzeichnet, daß die Hohlprofildichtungen (5) aus elastischem, endlos vulkanisiertem Material bestehen.

3. Trommel nach Anspruch 1 oder 2, dadurch gekennzeichnet, daß die radial nach außen weisende Fläche (5a) der Hohlprofildichtungen (5) im aufgeblasenen Zustand in Richtung der Trommelachse (6) etwa plan verläuft und mit einem Profil (5b) versehen ist.

4. Trommel nach einem der Ansprüche 1 bis 3, dadurch gekennzeichnet, daß die Spannscheiben (3, 4) entlang ihres Außenumfangs jeweils eine radiale Nut (9) zur Aufnahme der Hohlprofildichtung (5) aufweisen.

5. Trommel nach einem der Ansprüche 1 bis 4, dadurch gekennzeichnet, daß die Trommelachse (6) feststehend gebildet ist und daß die Spannscheiben (3, 4) drehbar auf der Trommelachse gelagert sind.

6. Trommel nach Anspruch 5, dadurch gekennzeichnet, daß die Trommelachse (6) mit Hohlkanälen (6a, 6b) versehen ist, durch die hindurch das Arbeitsfluid in das Trommelinnere einführbar und aus dem Trommelinneren abführbar ist.

7. Trommel nach Anspruch 6, gekennzeichnet durch eine Sprühanlage (7, 7a) zum Aufsprühen des Arbeitsfluids auf die Mantelinnenseite (2a), wobei die Sprühanlage ortsfest an der feststehenden Trommelachse (6) angebracht ist.

8. Trommel nach Anspruch 7, dadurch gekennzeichnet, daß nach unten bis in die Nähe der Mantelinnenseite (2a) geführte Siphonrohre (17) zum Abführen des Arbeitsfluids an der Trommelachse (6) befestigt sind und mit deren abführendem Hohlkanal (6b) in Verbindung stehen und daß eine ins Trommelinnere führende Druckeinlaßleitung (14) zur Beaufschlagung des Trommelinneren mit Überdruck vorgesehen ist.

9. Trommel nach einem der Ansprüche 1 bis 8, gekennzeichnet durch eine oder mehrere Stützrollen (21, 22), deren Drehachsen ortsfest parallel zur Trommelachse (6) gehalten sind und die einer Aufgabestation (19) und/oder einer Abgabestation (20) auf der jeweils anderen Mantelseite gegenüberliegend am Trommelmantel (2) anliegen und bei Rotation des Trommelmantels an diesem abrollen.

## Claims

1. Drum, in particular a cooling or heating drum, whose drum skin is used to transfer heat between an operating fluid that may be applied to the inner side (2a) of the skin or the outer side (2b) of the skin and a raw product that may be applied to the respective side lying opposite the other side of the skin and in which retaining discs (3, 4) are arranged at the end faces of the drum, which have on their outer circumference radially expandable means (5) for detachable and sealed, tightened retention of the drum skin, characterised in that the drum skin comprises an endless band (2), that the retaining discs (3, 4) have a smaller circumferential length than that of the endless band, and that endless, pneumatically inflatable hollow-profiled seals (5) are provided running along the outer circumference of the retaining discs as a means of retaining the endless band (2) on the retaining discs (3, 4).

2. Drum as claimed in claim 1, characterised in that the hollow-profiled seals (5) are made from elastic, endless vulcanised material.

3. Drum as claimed in claim 1 or 2, characterised in that the radial, outwardly facing surface (5a) of the hollow-profiled seals (5) in the inflated state runs substantially horizontally in the direction of the drum axis (6) and is provided with a profile (5b).

4. Drum as claimed in one of claims 1 to 3, characterised in that the retaining discs (3, 4) respectively have a radial groove (9) along their outer circumferences to receive the hollow-profiled seal (5).

5. Drum as claimed in one of claims 1 to 5, characterised in that the drum axle (6) is permanently fixed and that the retaining discs (3, 4) are rotatably mounted on the drum axle.

6. Drum as claimed in claim 5, characterised in that the drum axle (6) is provided with hollow channels (6a, 6b), through which the operating fluid is fed into the interior of the drum and from which it is drawn off.

7. Drum as claimed in claim 6, characterised by a spray assembly (7, 7a) for spraying the operating fluid onto the inner side (2a) of the skin, whereby the spray assembly is permanently fixed to the permanently fixed drum axle (6).

8. Drum as claimed in claim 7, characterised in that siphon pipes (17) running downwards to the vicinity of the inner side (2a) of the skin for draining off the operating fluid are joined to the drum axle (6) and are connected to the hollow outlet channel (6b) of the axle and that a pressure supply inlet (14) opening into the interior of the drum is provided for applying overpressure to the interior of the drum.

9. Drum as claimed in one of claims 1 to 8, characterised by one or several support rollers (21, 22), whose axles of rotation are permanently retained parallel to the drum axle (6) and which lie adjacent to the wall of the skin opposite an input station (19) and/or an output station (20) on the other respective side of the skin and, during rotation of the drum skin, roll off this.

## Revendications

1. Tambour, notamment tambour de refroidissement du chauffage, dont l'enveloppe sert à réaliser le transfert thermique entre un fluide de travail, qui peut être appliqué sur la face intérieure (2a) ou sur la face extérieure (2b) de l'enveloppe et une matière première pouvant être appliquée à l'opposé sur l'autre face respective de l'enveloppe et dans lequel sur les faces frontales du tambour sont disposés des disques de serrage (3,4), qui comportent, sur leur pourtour extérieur, des moyens (5) pouvant être déployés radialement et qui servent à retenir l'enveloppe du tambour, d'une manière amovible et à l'état serré et étanche, caractérisé en ce que l'enveloppe du tambour est constituée par une bande sans fin (2), que les disques de serrage (3,4) possèdent une longueur circonférentielle faible par rapport à celle de la bande sans fin et qu'il est prévu, comme moyens pour retenir la bande sans fin (2) sur les disques de serrage (3,4), des éléments d'étanchéité profilés creux sans fin (5), qui s'étendent sur la périphérie extérieure des disques de serrage et peuvent être gonflés pneumatiquement.

2. Tambour selon la revendication 1, caractérisé en ce que les éléments d'étanchéité profilés creux (5) sont réalisés en un matériau élastique, vulcanisé selon une forme sans fin.

3. Tambour selon la revendication 1 ou 2, caractérisé en ce que la surface (5a), qui est tournée radialement vers l'extérieur, des éléments d'étanchéité creux (5) s'étend, à l'état gonflé, selon une disposition approximativement plane, dans la direction de l'axe (6) du tambour et possède un profil (5b).

4. Tambour selon l'une des revendications 1 à 3, caractérisé en ce que les disques de serrage (3,4) possèdent chacun, le long de leur circonférence extérieure, une gorge radiale (9) servant à loger l'élément d'étanchéité profilé creux (5).

5. Tambour selon l'une des revendications 1 à 4, caractérisé en ce que l'axe (6) du noyau du tambour est agencé de manière à être fixe et que les disques de serrage (3,4) sont montés de manière à pouvoir tourner sur l'axe du tambour.

6. Tambour selon la revendication 5, caractérisé en ce que l'axe (6) du tambour comporte des canaux (6a,6b), au moyen desquels le fluide de travail peut être introduit à l'intérieur du tambour et peut être évacué de l'intérieur du tambour.

7. Tambour selon la revendication 6, caractérisé par une installation de pulvérisation (7,7a) servant à pulvériser le fluide de travail sur la face intérieure (2a) de l'enveloppe, l'installation de pulvérisation étant montée fixe sur l'axe fixe (6) du tambour.

8. Tambour selon la revendication 7, caractérisé en ce que des tubes à siphon (17), qui s'étendent vers le bas jusqu'à proximité de la face intérieure (2a) de l'enveloppe et servent à évacuer le fluide de travail, sont fixés sur l'axe (6) du tambour et sont reliés au canal d'évaluation (6b) de l'axe et qu'il est prévu une canalisation d'admission de pression (14), qui débouche à l'intérieur du tambour et sert à charger l'intérieur du tambour avec une surpression.

9. Tambour selon l'une des revendications 1 à 8, caractérisé par un ou plusieurs galets de support (21,22), dont les axes de rotation sont maintenus fixes parallèlement à l'axe (6) du tambour et qui s'appliquent en vis-à-vis d'un poste de chargement (19) et/ou d'un poste de déchargement (20), sur l'autre face respective de l'enveloppe (2) du tambour, contre cette dernière et, lors de la rotation de l'enveloppe du tambour, roulent sur cette dernière.
